# EUROPÄISCHE PATENTSCHRIFT

(11) **EP 3 592 606 B1**
(45) Veröffentlichungstag und Bekanntmachung des Hinweises auf die Patenterteilung: **26.01.2022**
(21) Anmeldenummer: 18708069.2
(22) Anmeldetag: 20.02.2018
(51) Int. Cl.: B60Q 1/52

(54) **KRAFTFAHRZEUG MIT EINEM BELEUCHTUNGSMODUL ZUR GENERIERUNG EINER SYMBOLIK**
MOTOR VEHICLE COMPRISING A LIGHTING MODULE FOR GENERATING A SET OF SYMBOLS
VÉHICULE À MOTEUR ÉQUIPÉ D'UN MODULE D'ÉCLAIRAGE SERVANT À GÉNÉRER UN SYMBOLE

(30) Priorität: 09.03.2017 DE 102017203899
(43) Veröffentlichungstag der Anmeldung: 15.01.2020
(73) Patentinhaber: Bayerische Motoren Werke Aktiengesellschaft, 80809 München (DE)
(72) Erfinder: SOROKIN, Lenja, 80805 München (DE); HANAFI, Abdelmalek, 80686 München (DE)
(86) Internationale Anmeldenummer: PCT/EP2018/054128
(87) Internationale Veröffentlichungsnummer: WO 2018/162220

(56) Entgegenhaltungen:
- DE-A1-102009 009 473
- DE-A1-102011 119 923
- DE-A1-102013 217 057
- DE-B3-102011 081 394
- JP-A- 2014 013 524
- US-A1- 2015 336 502
- US-A1- 2016 167 648

## Beschreibung

Die Erfindung betrifft ein Kraftfahrzeug mit einem Beleuchtungsmodul zur Generierung einer Symbolik.

Aus dem Stand der Technik sind Beleuchtungsmodule für Kraftfahrzeuge bekannt, mit denen Symbole auf dem Boden im Umfeld des Kraftfahrzeugs dargestellt werden. Beispielsweise offenbart die Druckschrift DE 10 2013 211 877 A1 ein Kraftfahrzeug mit einem Projektionsmodul aus einem Array aus Projektionsoptiken. Mit diesem Projektionsmodul wird eine Lichtverteilung in der Form eines Lichtteppichs im Umfeld des Kraftfahrzeugs und insbesondere neben den Einstiegstüren generiert. Dabei werden statische Bilder erzeugt, die keinen Bezug zu einer aktuellen Verkehrssituation haben.

Die Druckschrift DE 10 2009 009 473 A1 beschreibt ein Verfahren zum Unterstützen eines Fahrers eines Fahrzeugs und anderer Verkehrsteilnehmer, bei dem andere Verkehrsteilnehmer im Umfeld des Fahrzeugs detektiert werden und im Falle, dass ein anderer Verkehrsteilnehmer eine Kollisionsgefahr für das Fahrzeug darstellt, ein Lichtzeichen auf die Fahrbahn projiziert wird. Das Lichtzeichen kann in der aktuellen oder prognostizierten Bewegungsrichtung vor dem anderen Verkehrsteilnehmer wiedergegeben werden.

Die Druckschrift DE 10 2011 081 394 B3 offenbart ein Verfahren zum Hervorheben eines erwarteten Bewegungspfads eines Fahrzeugs, wobei das Verfahren einen Schritt des Ermittelns einer Verkehrssituation unter Verwendung einer Information über das Umfeld des Fahrzeugs umfasst. Ferner beinhaltet das Verfahren einen Schritt des Bestimmens des erwarteten Bewegungspfads basierend auf der Verkehrssituation. Weiterhin umfasst das Verfahren einen Schritt des Bereitstellens eines Steuersignals zum Ansteuern einer Fahrbahnmarkierungsvorrichtung unter Verwendung des Bewegungspfads, um den erwarteten Bewegungspfad hervorzuheben.

Die Druckschrift DE 10 2013 217 057 A1 beschreibt eine Fußgängerunterrichtungsvorrichtung in einem Kraftfahrzeug, wobei ein Unterrichtungszielfußgänger mittels einer Unterrichtungszielerfassungseinrichtung basierend auf den Erfassungsergebnissen einer Umgebungsobjekterfassungseinrichtung erfasst wird. Der Unterrichtungszielfußgänger wird darüber unterrichtet, dass er durch die Unterrichtungszielerfassungseinrichtung erfasst wurde. Zur Unterrichtung des Fußgängers kann beispielsweise eine Musterabstrahleinrichtung genutzt werden, die ein vorbestimmtes Muster auf eine Straßenoberfläche abstrahlt. Das Muster kann gegebenenfalls in einer vorhergesagten Fortbewegungsrichtung des Unterrichtungszielfußgängers fortschreitend angezeigt werden.

Das Dokument DE 10 2011 119 923 A1 offenbart ein Beleuchtungssystem für Luft- und Landfahrzeuge, bei dem mittels einer Projektionseinheit optische Orientierungshilfen, wie z.B. eine optische Abstandswarnung, auf eine Fahrbahn projiziert werden.

Das Dokument JP 2014 013 524 A beschreibt eine Fahrzeug-Benachrichtigungs-Vorrichtung, um einen Fußgänger über das Vorhandensein eines Fahrzeugs zu informieren. Dabei wird die Fahrroute des Fahrzeugs vorhergesagt und eine Symbolik auf der Fahrbahn der Fahrtroute durch sichtbares Licht dargestellt, wenn ein Fußgänger im Bereich der Fahrroute detektiert wird. Hierdurch wird dem Fußgänger angezeigt, dass er die Fahrroute nicht betreten soll.

Die Druckschriften US 2015/336502 A1 und US 2016/167648 A1 zeigen jeweils ein Kraftfahrzeug gemäß dem Oberbegriff des Anspruchs 1.

Aufgabe der Erfindung ist es, ein Kraftfahrzeug mit einem Beleuchtungsmodul zur Generierung einer Symbolik auf dem Boden im Umfeld des Kraftfahrzeugs zu schaffen, wobei die Symbolik dynamisch an die aktuelle Verkehrssituation angepasst wird.

Diese Aufgabe wird durch das Kraftfahrzeug gemäß Patentanspruch 1 gelöst. Weiterbildungen der Erfindung sind in den abhängigen Ansprüchen definiert.

Das erfindungsgemäße Kraftfahrzeug, bei dem es sich um ein manuell gesteuertes oder auch ein autonom bzw. teilautonom fahrendes Fahrzeug handeln kann, umfasst ein Beleuchtungsmodul zur Generierung einer Symbolik auf dem Boden im Umfeld des Kraftfahrzeugs. Vorzugsweise handelt es sich bei dem Beleuchtungsmodul um ein Projektionsmodul, welches die Symbolik auf den Boden im Umfeld des Kraftfahrzeugs projiziert. Darüber hinaus beinhaltet das erfindungsgemäße Kraftfahrzeug eine Steuereinrichtung zur Steuerung des Betriebs des Beleuchtungsmoduls, wobei die Steuereinrichtung ggf. auch Bestandteil des Beleuchtungsmoduls sein kann. Die Steuereinrichtung ist derart ausgestaltet, dass sie aus Informationen zu einem Verkehrsteilnehmer, der sich im Umfeld des Kraftfahrzeugs befindet, die Bewegung des Verkehrsteilnehmers prädiziert und die Symbolik automatisch in Abhängigkeit von der prädizierten Bewegung des Verkehrsteilnehmers anpasst.

Die Steuereinrichtung des erfindungsgemäßen Kraftfahrzeugs ist ferner derart ausgestaltet, dass zumindest ein Teil der Symbolik in Abhängigkeit von der prädizierten Bewegung des Verkehrsteilnehmers an einem Ort auf dem Boden generiert wird, an dem sich der Verkehrsteilnehmer zukünftig gemäß seiner prädizierten Bewegung befinden wird und an dem eine Kollisionsgefahr mit dem Kraftfahrzeug bei Weiterbewegung des Verkehrsteilnehmers besteht. Auf diese Weise kann rechtzeitig eine Warnung für den Verkehrsteilnehmer bzw. ggf. auch andere Verkehrsteilnehmer und insbesondere auch den Fahrer des Kraftfahrzeugs generiert werden.

Ferner ist die Steuereinrichtung des erfindungsgemäßen Kraftfahrzeugs derart ausgestaltet, dass sie die Symbolik an eine intendierte Bewegung des Kraftfahrzeugs anpasst, wobei durch die Symbolik eine intendierte Ausweichbewegung des Kraftfahrzeugs zur Vermeidung einer Kollision mit dem Verkehrsteilnehmer angezeigt wird, wobei die intendierte Ausweichbewegung vorzugsweise durch eine oder mehrere Linien am Boden dargestellt wird.

Die Informationen zu der intendierten Bewegung des Kraftfahrzeugs können bei einem autonom fahrenden Kraftfahrzeug aus dessen Steuerung ausgelesen werden. Im Falle eines teilautonom fahrenden Kraftfahrzeugs oder eines manuell gesteuerten Kraftfahrzeugs können diese Informationen z.B. aus einem Fahrerassistenzsystem ermittelt werden, welches bei einer drohenden Gefahr kurzzeitig die Steuerung des Kraftfahrzeugs übernimmt. Ferner können zur Bestimmung der intendierten Bewegung Informationen aus dem Navigationssystem des Kraftfahrzeugs, insbesondere die aktuelle Navigationsroute, herangezogen werden.

Darüber hinaus ist die Steuereinrichtung des erfindungsgemäßen Kraftfahrzeugs derart ausgestaltet, dass zumindest ein Teil der Symbolik an dem Ort generiert wird, an dem der Verkehrsteilnehmer, der sich neben der Fahrbahn bewegt, auf welcher das Kraftfahrzeug fährt, gemäß seiner prädizierten Bewegung die Fahrbahn betreten wird. Dabei ist der Verkehrsteilnehmer vorzugsweise ein Fußgänger oder Fahrradfahrer.

Gegebenenfalls kann das erfindungsgemäße Kraftfahrzeug auch mehrere der oben beschriebenen Beleuchtungsmodule mit einer entsprechend zugeordneten Steuereinrichtung umfassen.

Das erfindungsgemäße Kraftfahrzeug weist den Vorteil auf, dass frühzeitig mit einer entsprechenden Bewegungsprädiktion die durch das Kraftfahrzeug generierte Symbolik angepasst wird und hierdurch geeignete Hinweise, insbesondere für den Fahrer des Kraftfahrzeugs und/oder andere Verkehrsteilnehmer, erzeugt werden können.

Die Symbolik kann erfindungsgemäß beliebig ausgestaltet sein und unterschiedliche Symbole und insbesondere auch Buchstaben und Zahlen enthalten. Vorzugsweise ist die Symbolik derart gewählt, dass hierdurch intuitiv ein Warnsignal vermittelt wird. Der Begriff der Anpassung der Symbolik ist weit zu verstehen. Im Besonderen kann im Rahmen der Anpassung der Symbolik auch nur ein Teilbereich der Symbolik verändert werden. Je nach Ausgestaltung können verschiedene Parameter der Symbolik im Rahmen ihrer Anpassung variiert werden. Insbesondere kann die Größe der Symbolik, die Ausrichtung der Symbolik (d.h. deren Verdrehung am Boden), die Position der Symbolik, die Form der Symbolik, die Helligkeit der Symbolik, die Farbe der Symbolik und dergleichen verändert werden. Wie erwähnt, können diese Parameter auch nur in Teilbereichen der Symbolik angepasst werden.

Unter dem obigen Begriff des Verkehrsteilnehmers fallen beliebige, am Straßenverkehr teilnehmende Fahrzeuge, insbesondere andere Kraftfahrzeuge, d.h. PKWs, LKWs, Motorräder und dergleichen, und auch ohne Motor angetriebene Fahrzeuge, wie z.B. Fahrräder. Darüber hinaus umfasst der Begriff des Verkehrsteilnehmers auch Fußgänger. Sofern im Folgenden auf die Wahrnehmung der Symbolik durch einen Verkehrsteilnehmer Bezug genommen wird, ist im Falle eines Fahrzeugs die Wahrnehmung durch eine Person zu verstehen, welche sich im bzw. auf dem Fahrzeug befindet.

Die Informationen zu dem Verkehrsteilnehmer im Umfeld des Kraftfahrzeugs, welche durch die Steuereinrichtung verarbeitet werden, können aus unterschiedlichen Quellen stammen. In einer bevorzugten Ausführungsform umfasst das Kraftfahrzeug eine Umfeldsensorik, insbesondere eine Kamera und/oder eine Lidareinrichtung und/oder eine Radareinrichtung, um zumindest teilweise die Informationen zu dem Verkehrsteilnehmer zu erfassen und der Steuereinrichtung bereitzustellen.

Alternativ oder zusätzlich kann das Kraftfahrzeug auch eine Kommunikationsschnittstelle und insbesondere eine drahtlose Kommunikationsschnittstelle umfassen, um mit dieser Kommunikationsschnittstelle zumindest teilweise die Informationen zu dem Verkehrsteilnehmer zu empfangen und der Steuereinrichtung bereitzustellen. Vorzugsweise ist diese Kommunikationsschnittstelle eine Car-to-Car- und/oder Car-to-X-Kommunikationsschnittstelle. Über solche Schnittstellen werden Informationen zwischen Fahrzeugen bzw. zwischen Fahrzeugen und Infrastruktureinrichtung ausgetauscht. Zum Beispiel kann das erfindungsgemäße Kraftfahrzeug auf Sensorinformationen zurückgreifen, die von einem anderen Kraftfahrzeug ermittelt wurden.

In einer bevorzugten Variante umfasst die Symbolik eine Haltelinie, an welcher der Verkehrsteilnehmer spätestens anhalten sollte. Hierdurch wird der Ort der Kollisionsgefahr intuitiv angezeigt. Diese Haltelinie kann ggf. durch weitere Symbole zur Verstärkung ihrer Wahrnehmbarkeit ergänzt werden, wie z.B. Pfeile, die auf die Haltelinie deuten.

In einer weiteren bevorzugten Ausführungsform des erfindungsgemäßen Kraftfahrzeugs ist die generierte Symbolik derart ausgestaltet, dass sie dem Verkehrsteilnehmer einen Bezug zu dem Kraftfahrzeug vermittelt. Auf diese Weise kann der Verkehrsteilnehmer schnell erkennen, von welchem Kraftfahrzeug die Symbolik stammt. In einer bevorzugten Variante umfasst die Symbolik eine Mehrzahl von Linien, welche in Richtung hin zum Kraftfahrzeug aufeinander zulaufen.

Je nach Ausgestaltung kann das Beleuchtungsmodul im erfindungsgemäßen Kraftfahrzeug unterschiedlich verbaut sein. Insbesondere kann das Beleuchtungsmodul derart im Kraftfahrzeug angeordnet sein, dass es die Symbolik in Fahrtrichtung vor dem Kraftfahrzeug generiert. Ebenso ist es möglich, dass das Beleuchtungsmodul die Symbolik in Fahrtrichtung hinter dem Kraftfahrzeug generiert. Gegebenenfalls kann das Beleuchtungsmodul auch derart im Kraftfahrzeug verbaut sein, dass die Symbolik seitlich neben dem Kraftfahrzeug generiert wird.

Das Beleuchtungsmodul im erfindungsgemäßen Kraftfahrzeug kann unterschiedlich ausgestaltet sein. Wie bereits oben erwähnt, handelt es sich vorzugsweise um ein Projektionsmodul. Um eine große Reichweite des Beleuchtungsmoduls sicherzustellen, umfasst dieses vorzugsweise eine Laserlichtquelle, mit dessen Licht die Generierung der Symbolik auf dem Boden bewirkt wird. Ebenso ist es möglich, dass das Beleuchtungsmodul eine scannende Beleuchtungseinrichtung ist, welche die Symbolik mittels einer Scanbewegung eines Lichtspots auf dem Boden generiert. Mittels eines scannenden Beleuchtungsmoduls können auf einfache Weise die Position, Ausrichtung und Form der Symbolik verändert werden.

Ein Ausführungsbeispiel der Erfindung wird nachfolgend anhand der beigefügten Figuren detailliert beschrieben.

Es zeigen:
- Fig. 1: eine schematische Draufsicht auf ein erstes Szenario, in dem mit einer Ausführungsform eines nicht erfindungsgemäßen Kraftfahrzeugs eine Symbolik generiert wird; und
- Fig. 2 und Fig. 3: schematische Draufsichten auf ein zweites Szenario, in dem mit einer Ausführungsform des erfindungsgemäßen Kraftfahrzeugs der
- Fig.3 eine: Symbolik generiert wird.

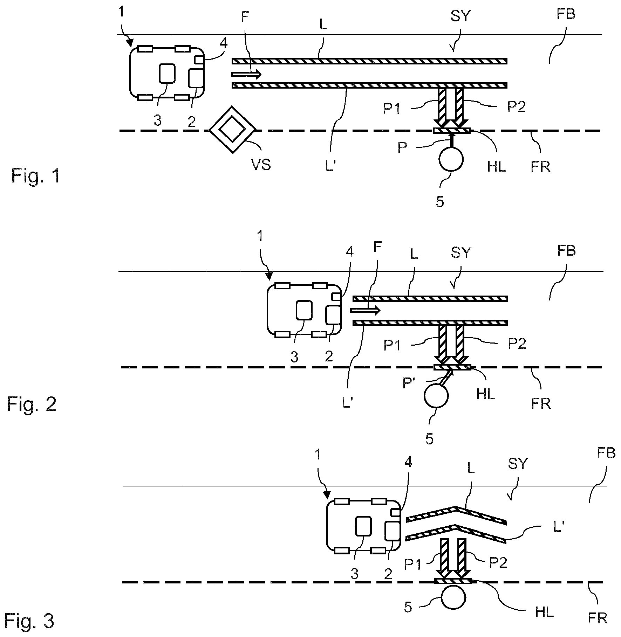

Fig. 1 zeigt eine Draufsicht auf ein erfindungsgemäßes Kraftfahrzeug 1, welches ein Beleuchtungsmodul 2 umfasst, um mit diesem Modul eine Symbolik auf den Boden vor dem Kraftfahrzeug zu projizieren. Das Kraftfahrzeug umfasst ferner eine Steuereinrichtung 3, mit der die durch das Beleuchtungsmodul generierte Symbolik angepasst wird. Darüber hinaus beinhaltet das Kraftfahrzeug eine Umfeldsensorik 4, die beispielsweise als Kamera ausgestaltet ist und Objekte vor dem Kraftfahrzeug 1 erfasst. Die mit der Umfeldsensorik 4 erfassten Informationen werden durch die Steuereinrichtung 3 verarbeitet, um hierüber andere Verkehrsteilnehmer zu detektieren und basierend auf diesen Informationen deren Bewegung zu prädizieren. Entsprechende Verfahren zur Bewegungsprädiktion sind an sich bekannt und werden deshalb nicht näher erläutert. In Abhängigkeit von der prädizierten Bewegung erfolgt dann die Anpassung der auf den Boden projizierten Symbolik, wie im Folgenden noch näher erläutert wird.

In dem Szenario der Fig. 1 fährt das Kraftfahrzeug 1 in die Vorwärtsrichtung, die durch den Pfeil F angedeutet ist. Das Kraftfahrzeug befindet sich dabei auf einer Fahrbahn FB, wobei der rechte Fahrbahnrand FR durch eine gestrichelte Linie wiedergegeben ist. Die Fahrbahn stellt eine Vorfahrtsstraße dar, wie durch das Vorfahrtsschild VS verdeutlicht wird. Im Szenario der Fig. 1 bewegt sich ein schematisch angedeuteter Fußgänger 5 hin zu dem rechten Fahrbahnrand FR. Die Bewegung erfolgt dabei in Richtung senkrecht zum Fahrbahnrand FR, wie durch den Pfeil P angedeutet wird. Mittels der Umfeldsensorik 4 des Kraftfahrzeugs 1 wird der Verkehrsteilnehmer 5 sowie sein Bewegungsmuster detektiert. Diese Informationen werden der Steuereinrichtung 3 bereitgestellt. Im Falle der Fig. 1 erkennt die Steuereinrichtung 3, dass sich der Fußgänger 5 gemäß dem erfassten Bewegungsmuster hin zu dem rechten Fahrbahnrand FR und senkrecht zu diesem weiterbewegen wird. Als Konsequenz wird zur Warnung des Fußgängers 5 die in Fig. 1 dargestellte Symbolik SY auf dem Boden vor dem Kraftfahrzeug 1 generiert.

Die Symbolik SY umfasst zum einen die beiden gerade verlaufenden Linien L und L', welche in der hier beschriebenen nicht erfindungsgemäßen Ausführungsform der intendierten Bewegung des Kraftfahrzeugs entsprechen. In dem Szenario der Fig. 1 zeigen die Linien L und L' somit an, dass das Kraftfahrzeug weiterhin auf der Fahrbahn in gerader Richtung fahren wird. Im Falle eines autonom fahrenden Fahrzeugs ist diese Information im Kraftfahrzeug hinterlegt. Sollte das Kraftfahrzeug ein manuell gesteuertes bzw. teilautonom fahrendes Fahrzeug sein, kann diese Information aus verschiedenen Informationsquellen kommen, wie z.B. aus Fahrerassistenzsystemen oder aus dem Navigationssystem des Kraftfahrzeugs. Im einfachsten Fall wird über das Navigationssystem ermittelt, dass das Kraftfahrzeug auf einer geraden Fahrbahn fährt, wobei ohne weitere Anhaltspunkte daraus gefolgert wird, dass sich das Kraftfahrzeug in gerader Richtung auf dieser Fahrbahn weiterbewegt.

Zusätzlich zu den Linien beinhaltet die Symbolik SY eine Haltelinie HL, an der ferner zwei Pfeile P1 und P2 enden, die sich senkrecht zwischen der Linie L' und der Haltelinie HL erstrecken. Der Teilbereich der Symbolik, der sich aus den Pfeilen P1, P2 und der Haltelinie HL zusammensetzt, wird in der hier beschriebenen nicht erfindungsgemäßen Ausführungsform in Abhängigkeit von der prädizierten Bewegung des Fußgängers 5 so auf den Boden vor dem Kraftfahrzeug projiziert, dass die Haltelinie HL anzeigt, wo der Fußgänger 5 entsprechend seiner prädizierten Bewegung anhalten sollte, um eine Kollision mit dem Kraftfahrzeug 1 zu vermeiden. Mit anderen Worten wird die Haltelinie HL zusammen mit den Pfeilen P1 und P2 an einen Ort auf dem Boden projiziert, an dem der Eintritt des Fußgängers 5 in die Fahrbahn FB erfolgen wird. Die Haltelinie HL liegt folglich auf dem rechten Fahrbahnrand FR.

Sofern sich das prädizierte Bewegungsprofil des Fußgängers 5 nicht verändert, wird der Teilbereich der Symbolik aus den Pfeilen P1, P2 und der Haltelinie HL an der in Fig. 1 dargestellten Stelle festgehalten, auch wenn sich der Abstand zwischen dem Kraftfahrzeug 1 und dem Fußgänger 5 verkleinert. Mit anderen Worten wird die absolute Position dieses Teilbereichs der Symbolik festgehalten, wohingegen sich der relative Abstand zwischen diesem Teilbereich und dem Kraftfahrzeug verringert. Aufgrund der Tatsache, dass der generierte Teilbereich der Symbolik in Abhängigkeit von der prädizierten Bewegung des Fußgängers festgelegt wird, kann hierdurch eine frühzeitige Warnung für den Fußgänger generiert werden.

Fig. 2 und Fig. 3 zeigen in Draufsicht ein Szenario, welches ähnlich zu dem Szenario der Fig. 1 ist. Es werden deshalb für die gleichen Komponenten die gleichen Bezugszeichen verwendet. Das Szenario der Fig. 2 und Fig. 3 unterscheidet sich von Fig. 1 dahingehend, dass sich der Fußgänger 5 nicht mehr senkrecht zum Fahrbahnrand FR, sondern schräg zu diesem bewegt. In Analogie zu Fig. 1 wird wiederum durch die Umfeldsensorik 4 die Bewegung des Fußgängers 5 erfasst und aus dieser Bewegung mittels der Steuereinrichtung 3 prädiziert, dass sich der Fußgänger gemäß dem Pfeil P' schräg zum Fahrbahnrand bewegt. Als Folge wird der Teilbereich der Symbolik SY, der aus den Pfeilen P1, P2 und der Haltelinie HL besteht, nunmehr weiter rechts als in dem Szenario der Fig. 1 projiziert, da der Fußgänger weiter rechts den Fahrbahnrand FR erreichen wird. Da in dem Szenario der Fig. 2 noch keine direkte Kollisionsgefahr besteht, ist die intendierte Bewegung des Kraftfahrzeugs weiterhin eine Geradausfahrt, was durch die geraden Linien L und L' der projizierten Symbolik SY wiedergeben wird.

Fig. 3 zeigt das gleiche Szenario wie Fig. 2, jedoch zu einem späteren Zeitpunkt, zu dem der Fußgänger 5 den rechten Fahrbahnrand FR schon fast erreicht hat. Der Teilbereich der Symbolik aus Pfeilen P1, P2 und Haltelinie HL hat dabei die gleiche Position wie in Fig. 2. Aufgrund der nunmehr konkreten Kollisionsgefahr zwischen Kraftfahrzeug 1 und Fußgänger 5 beabsichtigt ein Fahrerassistenzsystem des Kraftfahrzeugs 1 automatisiert ein Ausweichmanöver hin zum linken Fahrbahnrand vorzunehmen. Diese Information wird von der Steuereinrichtung 3 verarbeitet, welche daraufhin das geplante Ausweichmanöver durch entsprechende Biegung der Linien L und L' am Boden des Kraftfahrzeugs anzeigt.

Auf diese Weise wird der Fußgänger 5 und auch der Fahrer des Kraftfahrzeugs 1 nochmals gesondert auf eine drohende Kollision und ein daran geknüpftes Ausweichmanöver hingewiesen.

Die im Vorangegangen beschriebene Ausführungsform der Erfindung weist eine Reihe von Vorteilen auf. Die Prädiktion der Bewegung eines Verkehrsteilnehmers im Umfeld eines Kraftfahrzeugs wird dazu genutzt, die durch das Kraftfahrzeug generierte Symbolik an die prädizierte Bewegung anzupassen. Auf diese Weise kann der Verkehrsteilnehmer bzw. der Fahrer des Kraftfahrzeugs frühzeitig vor drohenden Kollisionen gewarnt werden. Darüber hinaus wird mittels der am Boden generierten Symbolik auch die durch das Kraftfahrzeug intendierte Bewegung wiedergegen.

### Bezugszeichenliste

- 1: Kraftfahrzeug
- 2: Beleuchtungsmodul
- 3: Steuereinrichtung
- 4: Umfeldsensorik
- 5: Fußgänger
- SY: Symbolik
- VS: Verkehrsschild
- F: Fahrtrichtung des Kraftfahrzeugs
- P1, P2: Pfeile der Symbolik
- HL: Haltelinie der Symbolik
- L, L': Linien der Symbolik
- FB: Fahrbahn
- FR: rechter Fahrbahnrand
- P, P': prädizierte Bewegung des Fußgängers

## Patentansprüche

1. Kraftfahrzeug mit einem Beleuchtungsmodul (2) zur Generierung einer Symbolik (SY) auf dem Boden im Umfeld des Kraftfahrzeugs (1) und mit einer Steuereinrichtung (3) zur Steuerung des Betriebs des Beleuchtungsmoduls (2), wobei die Steuereinrichtung (3) derart ausgestaltet ist, dass sie aus Informationen zu einem Verkehrsteilnehmer (5), der sich im Umfeld des Kraftfahrzeugs (1) befindet, die Bewegung des Verkehrsteilnehmers (5) prädiziert und die Symbolik (SY) automatisch in Abhängigkeit von der prädizierten Bewegung des Verkehrsteilnehmers (5) anpasst, wobei zumindest ein Teil der Symbolik (SY) in Abhängigkeit von der prädizierten Bewegung des Verkehrsteilnehmers (5) an einem Ort auf dem Boden generiert wird, an dem sich der Verkehrsteilnehmer (5) zukünftig gemäß seiner prädizierten Bewegung befinden wird und an dem eine Kollisionsgefahr mit dem Kraftfahrzeug (1) bei Weiterbewegung des Verkehrsteilnehmers (5) besteht, wobei sich der Verkehrsteilnehmer neben der Fahrbahn bewegt, auf welcher das Kraftfahrzeug fährt, wobei die Steuereinrichtung derart ausgestaltet ist, dass zumindest ein Teil der Symbolik an dem Ort generiert wird, an dem der Verkehrsteilnehmer gemäß seiner prädizierten Bewegung die Fahrbahn betreten wird, wobei die
Steuereinrichtung (3) derart ausgestaltet ist, dass sie die Symbolik (SY) an eine intendierte Bewegung des Kraftfahrzeugs (3) anpasst, **dadurch gekennzeichnet, dass** die Steuereinrichtung (3) derart ausgestaltet ist, dass durch die Symbolik (SY) zusätzlich eine intendierte Ausweichbewegung des Kraftfahrzeugs (1) zur Vermeidung einer Kollision mit dem Verkehrsteilnehmer (5) angezeigt wird.

2. Kraftfahrzeug nach Anspruch 1, **dadurch gekennzeichnet, dass** das Kraftfahrzeug (1) eine Umfeldsensorik (4), insbesondere eine Kamera und/oder eine Lidareinrichtung und/oder eine Radareinrichtung umfasst, um zumindest teilweise die Informationen zu dem Verkehrsteilnehmer (5) zu erfassen und der Steuereinrichtung (3) bereitzustellen.

3. Kraftfahrzeug nach Anspruch 1 oder 2, **dadurch gekennzeichnet, dass** das Kraftfahrzeug (1) eine Kommunikationsschnittstelle, insbesondere eine drahtlose Kommunikationsschnittstelle, umfasst, um mit dieser Kommunikationsschnittstelle zumindest teilweise die Informationen zu dem Verkehrsteilnehmer (5) zu empfangen und der Steuereinrichtung (3) bereitzustellen, wobei die Kommunikationsschnittstelle insbesondere eine Car-to-Car- und/oder Car-to-X-Kommunikationsschnittstelle ist.

4. Kraftfahrzeug nach einem der vorhergehenden Ansprüche, **dadurch gekennzeichnet, dass** die Symbolik (SY) eine Haltelinie (HL) für den Verkehrsteilnehmer (5) umfasst, mit der dem Verkehrsteilnehmer (5) der Ort der Kollisionsgefahr angezeigt wird.

5. Kraftfahrzeug nach einem der der vorhergehenden Ansprüche, **dadurch gekennzeichnet, dass** die generierte Symbolik (SY) derart ausgestaltet ist, dass sie dem Verkehrsteilnehmer (5) einen Bezug zu dem Kraftfahrzeug (1) vermittelt.

6. Kraftfahrzeug nach Anspruch 5, **dadurch gekennzeichnet, dass** die Symbolik (SY) derart ausgestaltet ist, dass sie eine Mehrzahl von Linien umfasst, welche in Richtung hin zum Kraftfahrzeug (1) aufeinander zulaufen.

7. Kraftfahrzeug nach einem der vorhergehenden Ansprüche, **dadurch gekennzeichnet, dass** die intendierte Ausweichbewegung durch eine oder mehrere Linien (L, L') am Boden dargestellt wird.

8. Kraftfahrzeug nach einem der vorhergehenden Ansprüche, **dadurch gekennzeichnet, dass** das Beleuchtungsmodul (2) derart im Kraftfahrzeug (1) verbaut ist, dass es die Symbolik (SY) in Fahrtrichtung (F) vor dem Kraftfahrzeug (1) oder in Fahrtrichtung hinter dem Kraftfahrzeug (1) generiert.

9. Kraftfahrzeug nach einem der vorhergehenden Ansprüche, **dadurch gekennzeichnet, dass** das Beleuchtungsmodul (2) eine Laserlichtquelle umfasst, mit dessen Licht die Generierung der Symbolik (SY) auf dem Boden bewirkt wird, und/der das Beleuchtungsmodul (2) ein scannendes Beleuchtungsmodul (2) ist, welches die Symbolik (SY) mittels einer Scanbewegung eines Lichtspots auf dem Boden generiert.

## Claims

1. Motor vehicle with a lighting module (2) for generating a set of symbols (SY) on the ground in the vicinity of the motor vehicle (1) and with a control device (3) for controlling the operation of said lighting module (2), wherein the control device (3) is designed such that it predicts the movement of a road user (5) present in the vicinity of the motor vehicle (1) on the basis of information relating to said road user (5), and that it adapts the set of symbols (SY) automatically depending on the predicted movement of the road user (5), wherein at least a part of the set of symbols (SY) is generated, depending on the predicted movement of the road user (5), at a location on the ground at which the road user (5) will, in accordance with the predicted movement thereof, be located in the future, and at which a risk of collision with the motor vehicle (1) exists if the road user (5) continues to move, wherein the road user is moving next to the road surface on which the motor vehicle is driving, wherein the control device is designed such that at least a part of the set of symbols is generated at the location at which the road user will enter the road surface according to its predicted movement, wherein the control device (3) is designed in such a way that it adapts the set of symbols (SY) to an intended movement of the motor vehicle (3), **characterized in that** the control device (3) is designed in such a way that an intended avoidance maneuvre of the motor vehicle (1) for avoiding a collision with the road user (5) is
additionally displayed by means of the set of symbols (SY) .

2. Motor vehicle according to Claim 1, **characterized in that** the motor vehicle (1) comprises a vicinity sensor system (4), in particular a camera and/or a lidar device and/or a radar device, in order to capture, at least partly, the information relating to the road user (5) and to provide said information to the control device (3).

3. Motor vehicle according to Claim 1 or 2, **characterized in that** the motor vehicle (1) comprises a communication interface, in particular a wireless communication interface, in order to receive with this communication interface, at least partly, the information relating to the road user (5) and to provide said information to the control device (3), wherein the communication interface is, in particular, a car-to-car and/or car-to-X communication interface.

4. Motor vehicle according to one of the preceding claims, **characterized in that** the set of symbols (SY) comprises a stop line (HL) for the road user (5), with which the location of the risk of collision is indicated to the road user (5).

5. Motor vehicle according to one of the preceding claims, **characterized in that** the generated set of symbols (SY) is designed in such a way that it communicates a reference to the motor vehicle (1) to the road user (5).

6. Motor vehicle according to Claim 5, **characterized in that** the set of symbols (SY) is designed in such a way that it comprises a plurality of lines which converge in the direction of the motor vehicle (1).

7. Motor vehicle according to one of the preceding claims, **characterized in that** the intended avoidance manoeuvre is represented by one or more lines (L, L') on the ground.

8. Motor vehicle according to one of the preceding claims, **characterized in that** the lighting module (2) is installed in the motor vehicle (1) in such a way that it generates the set of symbols (SY) in front of the motor vehicle (1) in the direction of travel (F) or behind the motor vehicle (1) in the direction of travel.

9. Motor vehicle according to one of the preceding claims, **characterized in that** the lighting module (2) comprises a laser light source, the light of which is used to generate the set of symbols (SY) on the ground, and/or the lighting module (2) is a scanning lighting module (2) which generates the set of symbols (SY) by means of a scanning motion of a light spot on the ground.

## Revendications

1. Véhicule automobile comprenant un module d'éclairage (2), destiné à générer un ensemble de symboles (SY) au sol à proximité du véhicule automobile (1), et un dispositif de commande (3) destiné à commander le fonctionnement du module d'éclairage (2), le dispositif de commande (3) étant conçu pour prédire le déplacement d'un usager de la route (5), qui se trouve à proximité du véhicule automobile (1), à partir d'informations sur l'usager de la route (5) et adapter l'ensemble de symboles (SY) automatiquement en fonction du déplacement prédit de l'usager de la route (5), au moins une partie de l'ensemble de symboles (SY) étant générée, en fonction du déplacement prédit de l'usager de la route (5), à un futur emplacement sur le sol où l'usager de la route (5) se trouvera suivant le déplacement prédit de celui-ci et où un risque de collision avec le véhicule automobile (1) existe si l'usager de la route (5) continue à se déplacer, l'usager de la route se déplaçant à côté de la voie de roulement sur laquelle roule le véhicule automobile, le dispositif de commande étant conçu pour générer au moins une partie de l'ensemble de symboles à l'emplacement où l'usager de la route entrera dans la voie de roulement en fonction du déplacement prédit de celui-ci, le dispositif de commande (3) étant conçu pour adapter l'ensemble de symboles (SY) à un déplacement prévu du véhicule automobile (3), **caractérisé en ce que** le dispositif de commande (3) est conçu pour indiquer en plus, par le biais de l'ensemble de symboles (SY), un mouvement d'évitement prévu du véhicule automobile (1) afin d'éviter une collision avec l'usager de la route (5).

2. Véhicule automobile selon la revendication 1, **caractérisé en ce que** le véhicule automobile (1) comprend un système de détection d'environnement (4), notamment une caméra et/ou un dispositif lidar et/ou un dispositif radar, afin de détecter au moins partiellement les informations sur l'usager de la route (5) et les fournir au dispositif de commande (3).

3. Véhicule automobile selon la revendication 1 ou 2, **caractérisé en ce que** le véhicule automobile (1) comprend une interface de communication, notamment une interface de communication sans fil, destinée à recevoir au moins partiellement les informations sur l'usager de la route (5) par le biais de cette interface de communication et les fournir au dispositif de commande (3), l'interface de communication étant notamment une interface de communication car-to-car et/ou car-to-X.

4. Véhicule automobile selon l'une des revendications précédentes, **caractérisé en ce que** l'ensemble de symboles (SY) comporte une ligne d'arrêt (HL) destinée à l'usager de la route (5) et permettant d'indiquer à l'usager de la route (5) l'emplacement du risque de collision.

5. Véhicule automobile selon l'une des revendications précédentes, **caractérisé en ce que** l'ensemble de symboles généré (SY) est conçu pour communiquer à l'usager de la route (5) une référence relative au véhicule automobile (1).

6. Véhicule automobile selon la revendication 5, **caractérisé en ce que** l'ensemble de symboles (SY) est conçu pour comporter une pluralité de lignes qui convergent les unes vers les autres en direction du véhicule automobile (1).

7. Véhicule automobile selon l'une des revendications précédentes, **caractérisé en ce que** le mouvement d'évitement prévu est représenté sur le sol par une ou plusieurs lignes (L, L').

8. Véhicule automobile selon l'une des revendications précédentes, **caractérisé en ce que** le module d'éclairage (2) est installé dans le véhicule automobile (1) de manière à générer l'ensemble de symboles (SY) devant le véhicule automobile (1) dans le sens de roulement (F) ou derrière le véhicule automobile (1) dans le sens de roulement.

9. Véhicule automobile selon l'une des revendications précédentes, **caractérisé en ce que** le module d'éclairage (2) comprend une source de lumière laser dont la lumière est utilisée pour générer l'ensemble de symboles (SY) au sol, et/ou le module d'éclairage (2) est un module d'éclairage à balayage (2) qui génère l'ensemble de symboles (SY) par un mouvement de balayage d'un point lumineux sur le sol.
